(19) Europäisches Patentamt / European Patent Office / Office européen des brevets

(11) EP 3 252 428 B1

(12) EUROPEAN PATENT SPECIFICATION

(45) Date of publication and mention
of the grant of the patent:
**18.09.2019 Bulletin 2019/38**

(21) Application number: **16743382.0**

(22) Date of filing: **27.01.2016**

(51) Int Cl.:
*G01B 11/10* (2006.01)    *B60M 1/28* (2006.01)

(86) International application number:
**PCT/JP2016/052232**

(87) International publication number:
**WO 2016/121779 (04.08.2016 Gazette 2016/31)**

(54) **OVERHEAD WIRE WEAR MEASUREMENT DEVICE AND OVERHEAD WIRE WEAR MEASUREMENT METHOD**

OBERLEITUNGSVERSCHLEISSMESSVORRICHTUNG UND OBERLEITUNGSVERSCHLEISSMESSVERFAHREN

DISPOSITIF DE MESURE D'USURE DE FIL AÉRIEN ET PROCÉDÉ DE MESURE D'USURE DE FIL AÉRIEN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2015 JP 2015016220**

(43) Date of publication of application:
**06.12.2017 Bulletin 2017/49**

(73) Proprietor: **Meidensha Corporation Tokyo 141-6029 (JP)**

(72) Inventors:
• **KAMEYAMA, Satoru**
  **Tokyo 141-6029 (JP)**
• **NIWAKAWA, Makoto**
  **Tokyo 141-6029 (JP)**
• **KOBAYASHI, Daisuke**
  **Chiba 272-8510 (JP)**
• **SYUTTOU, Tomio**
  **Chiba 272-8510 (JP)**
• **ITO, Seiichi**
  **Chiba 272-8510 (JP)**
• **YOKOYAMA, Makoto**
  **Chiba 272-8510 (JP)**

(74) Representative: **Strehl Schübel-Hopf & Partner Maximilianstrasse 54 80538 München (DE)**

(56) References cited:
EP-A1- 0 791 498     DE-B3-102013 008 600
DE-C1- 19 634 060    JP-A- 2009 274 508
JP-A- 2009 274 508    JP-A- 2015 184 174

## Description

TECHNICAL FIELD

The present invention relates to a field of overhead wire inspection that measures wear of an overhead wire by capturing an image of the width of the lower surface of the overhead wire from the top of a train roof and by performing image processing on the image. The present invention particularly relates to an overhead wire wear measurement device and an overhead wire wear measurement method that determine a remaining-diameter-equivalent value for an overhead wire the pantograph-sliding surface of which is partly oblique (an unevenly worn overhead wire), the remaining-diameter-equivalent value serving as an index to know whether the overhead wire has reached the end of its life.

BACKGROUND ART

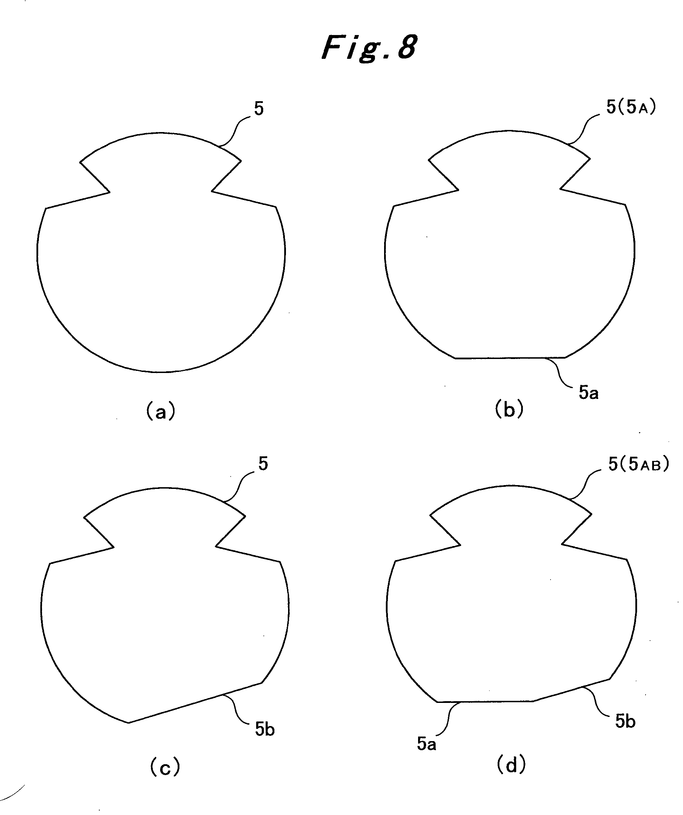

Fig. 8 shows a schematic, cross-sectional view of an overhead wire. Due to a contact with a pantograph (not shown), an unworn overhead wire 5 shown in Fig. 8(a) wears in such a manner that its lower surface becomes parallel to the horizontal plane as shown in Fig. 8(b) or becomes oblique to the horizontal plane as shown in Fig. 8(c). Hereinafter, a part of an overhead wire that has worn away to be parallel to the horizontal plane is referred to as a horizontally worn part 5a, and a part of an overhead wire that has worn away to be oblique to the horizontal plane is referred to as an obliquely worn part 5b.

At areas of the overhead wire 5 where an overlap is present or where a crossover wire is also present, the overhead wire 5 may also come to have a wear part in a wear state called uneven wear formed by the horizontally worn part 5a and the obliquely worn part 5b, as shown in Fig. 8(d).

Regarding wear of the overhead wire 5, Patent Document 1 below describes an overhead wire measurement method for measuring the amount of wear of the overhead wire 5 having the horizontally worn part 5a like the one shown in Fig. 8(b). In addition, Patent Document 2 below describes an overhead wire measurement method for measuring the amount of wear of the overhead wire 5 having the obliquely worn part 5b like the one shown in Fig. 8 (c).

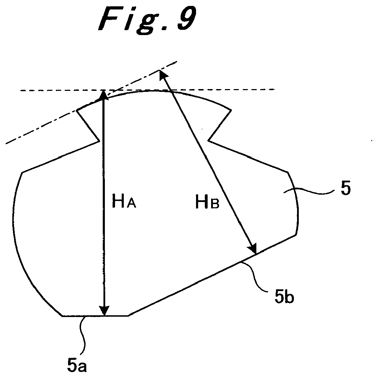

Patent Document 3 discloses use of laser light to measure uneven wear of the overhead wire 5 like the one shown in Fig. 8(d). Patent Document 3 converts the horizontally worn part 5a and the obliquely worn part 5b into binary representations based on the difference in the intensity of reflected laser light, and as shown in Fig. 9, calculates a remaining diameter $H_A$ of the horizontally worn part 5a and a remaining diameter HB of the obliquely worn part 5b using the widths of the horizontally worn part 5a and the obliquely worn part 5b and a prepared remaining diameter table.

The document JP 2009 274508 A (which corresponds to above mentioned Patent document 3) discloses an overhead wear measurement device according to the preamble of claim 1.

**PRIOR ART DOCUMENT**

**PATENT DOCUMENT**

Patent Document 1: Japanese Patent No. 4635657
Patent Document 2: Japanese Patent No. 5534058
Patent Document 3: Japanese Patent No. 5380000

NON-PATENT DOCUMENT

Non-Patent Document 1: "Overview of Electricity for Railway Engineers, Series 2 of Electric Train Lines, Train Wires" multi-authored by a writing group, JAPAN RAILWAY ELECTRICAL ENGINEERING ASSOCIATION, November 10, 1998, pp. 4 to 5 and 32 to 33

SUMMARY OF THE INVENTION

PROBLEMS TO BE SOLVED BY THE INVENTION

As described in Non-Patent Document 1, the overhead wire 5 may break when decreased in tensile strength. The tensile strength of the overhead wire 5 correlates with the area of a remaining cross section of the overhead wire 5, and therefore a remaining diameter calculated by measurement of an overhead wire should be set such that the remaining diameter correlates with the remaining cross-sectional area. To be more specific, it is contemplated that an appropriate index of the wear state of an unevenly worn overhead wire having the horizontally worn part 5a and the obliquely worn part 5b should be represented not by the two remaining diameters, namely the remaining diameters of the horizontally worn part 5a and the obliquely worn part 5b, but by a single value based on the cross-sectional area (such a value is hereinafter referred to as a remaining-diameter-equivalent value).

The conventional overhead wire measurement methods described above can obtain the remaining diameter values of the horizontally worn part 5a and the obliquely worn part 5b, but cannot obtain a single remaining-diameter-equivalent value which is based on the remaining cross-sectional area and takes the horizontally worn part 5a and the obliquely worn part 5b into account, particularly for the overhead wire 5 in an unevenly worn state. It has therefore been difficult to find an accurate tensile strength of the overhead wire 5.

In view of such circumstances, the present invention aims to provide an overhead wire wear measurement device and an overhead wire wear measurement method capable of calculating a single remaining-diameter-equivalent value which is based on the remaining cross-sectional area and takes a horizontally worn part and an obliquely worn part into account.

MEANS FOR SOLVING THE PROBLEMS

To solve the above problem, an overhead wire wear measurement method according to a first aspect of the invention is an overhead wire wear measurement method for finding a remaining diameter of an overhead wire by capturing an image of a lower surface of the overhead wire, which comes into contact with a pantograph, with a wear measurement camera disposed on a roof of a train and by performing image processing on the captured image of the lower surface of the overhead wire, characterized in that
a remaining diameter of a horizontally worn overhead wire having only a horizontally worn part is calculated as a remaining-diameter-equivalent value for an unevenly worn overhead wire having the horizontally worn part and an obliquely worn part, the horizontally worn overhead wire having the same cross-sectional area as the unevenly worn overhead wire.

An overhead wire wear measurement method according to a second aspect of the invention is characterized in that
the method comprises the steps of:

calculating real coordinates of a center point of the overhead wire from the image of the lower surface of the overhead wire;
calculating real coordinates of an end portion of the horizontally worn part, real coordinates of a division point between the horizontally worn part and the obliquely worn part, and real coordinates of an end portion of the obliquely worn part from the image of the lower surface of the overhead wire;
calculating a cross-sectional area of the unevenly worn overhead wire based on the real coordinates of the center point of the overhead wire, the real coordinates of the end portion of the horizontally worn part, the real coordinates of the division point between the horizontally worn part and the obliquely worn part, and the real coordinates of the end portion of the obliquely worn part; and
calculating the remaining-diameter-equivalent value based on the cross-sectional area of the unevenly worn overhead wire.

An overhead wire wear measurement device according to a third aspect of the invention is an overhead wire wear measurement device comprising a wear measurement camera configured to be disposed on a roof of a train and an image processing unit configured to find a remaining diameter of an overhead wire by causing the wear measurement camera to capture an image of a lower surface of the overhead wire, which comes into contact with a pantograph and by performing image processing on the captured image of the lower surface of the overhead wire, characterized in that
the image processing unit includes a remaining-diameter-equivalent value calculation processing unit configured to calculate a remaining diameter of a horizontally worn overhead wire having only a horizontally worn part, as a remaining-diameter-equivalent value for an unevenly worn overhead wire having the horizontally worn part and an obliquely worn part, the horizontally worn overhead wire having the same cross-sectional area as the unevenly worn overhead wire.

An overhead wire wear measurement device according to a fourth aspect of the invention is characterized in that
the image processing unit includes

an overhead wire center point position calculation processing unit configured to calculate real coordinates of a center point of the overhead wire from the image of the lower surface of the overhead wire;
a division point positions calculation processing unit configured to calculate at least real coordinates of an end portion of the horizontally worn part, real coordinates of a division point between the horizontally worn part and the obliquely worn part, and real coordinates of an end portion of the obliquely worn part from the image of the lower surface of the overhead wire; and

a wear cross-sectional area calculation processing unit configured to calculate a cross-sectional area of the unevenly worn overhead wire based on the real coordinates of the center point of the overhead wire calculated by the overhead wire center point position calculation processing unit and on the real coordinates of the end portion of the horizontally worn part, the real coordinates of the division point between the horizontally worn part and the obliquely worn part, and the real coordinates of the end portion of the obliquely worn part calculated by the division point positions calculation processing unit, and

the remaining-diameter-equivalent value calculation processing unit is configured to calculate the remaining-diameter-equivalent value based on the cross-sectional area of the unevenly worn overhead wire calculated by the wear cross-sectional area calculation processing unit.

EFFECT OF THE INVENTION

An overhead wire wear measurement device and an overhead wire wear measurement method according to the present invention can find an accurate tensile strength of even an unevenly worn overhead wire having a worn part formed by a horizontally worn part and an obliquely worn part by calculating a remaining-diameter-equivalent value taking a remaining cross-sectional area into account.

BRIEF DESCRIPTION OF THE DRAWINGS

Fig. 1 is a diagram illustrating an overhead wire wear measurement device according to an embodiment of the present invention.
Fig. 2 is a diagram of the configuration of the overhead wire wear measurement device according to the embodiment of the present invention.
Fig. 3 is a flowchart of processing performed by an image processing unit of the overhead wire wear measurement device according to the embodiment of the present invention.
Fig. 4 is a diagram illustrating an example of a line sensor image.
Fig. 5 is a diagram illustrating the relations among an overhead wire, a camera center point, and a sensor plane.
Fig. 6 is a diagram illustrating a method for calculating the cross-sectional area of an overhead wire.
Fig. 7 is a diagram illustrating a method for calculating a remaining-diameter-equivalent value.
Fig. 8 includes schematic diagrams showing cross-sections of an overhead wire, Fig. 8 (a) showing an unworn overhead wire, Fig. 8(b) showing an overhead wire with a horizontally worn part, Fig. 8(c) showing an overhead wire with an obliquely worn part, and Fig. 8(d) showing an overhead wire with a horizontally worn part and an obliquely worn part.
Fig. 9 is a diagram illustrating an example conventional method for calculating the remaining diameters of an unevenly worn overhead wire.

MODE FOR CARRYING OUT THE INVENTION

An overhead wire wear measurement device according to the present invention is described in detail below with reference to the drawings.

EMBODIMENT

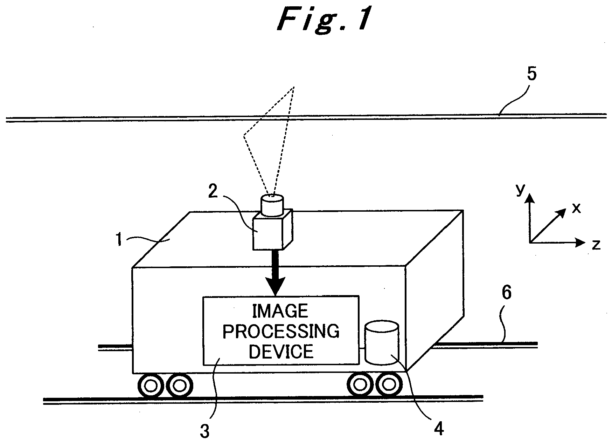

An embodiment of an overhead wire wear measurement device according to the present invention is described using Figs. 1 to 7.

In the present embodiment, as shown in Fig. 1, a line sensor camera (wear measurement camera) 2 is disposed on the roof of an inspection vehicle (train) 1 as image input means that captures an image of the lower surface of an overhead wire 5, which comes into contact with a pantograph (not shown) . An image processing device (image processing unit) 3 and a recording device 4 are disposed inside the inspection vehicle 1.

The line sensor camera 2 is oriented in such a manner as to capture an image of an area vertically above the inspection vehicle 1 with its scanline direction being the same as the direction of crossties for rails 6, or in other words, orthogonal to the travel direction of the inspection vehicle 1. With such an orientation, a scanline of the line sensor camera 2 crosses the overhead wire 5. Signals representing the image of the lower surface of the overhead wire 5 captured by the line sensor camera 2 are inputted to the image processing device 3.

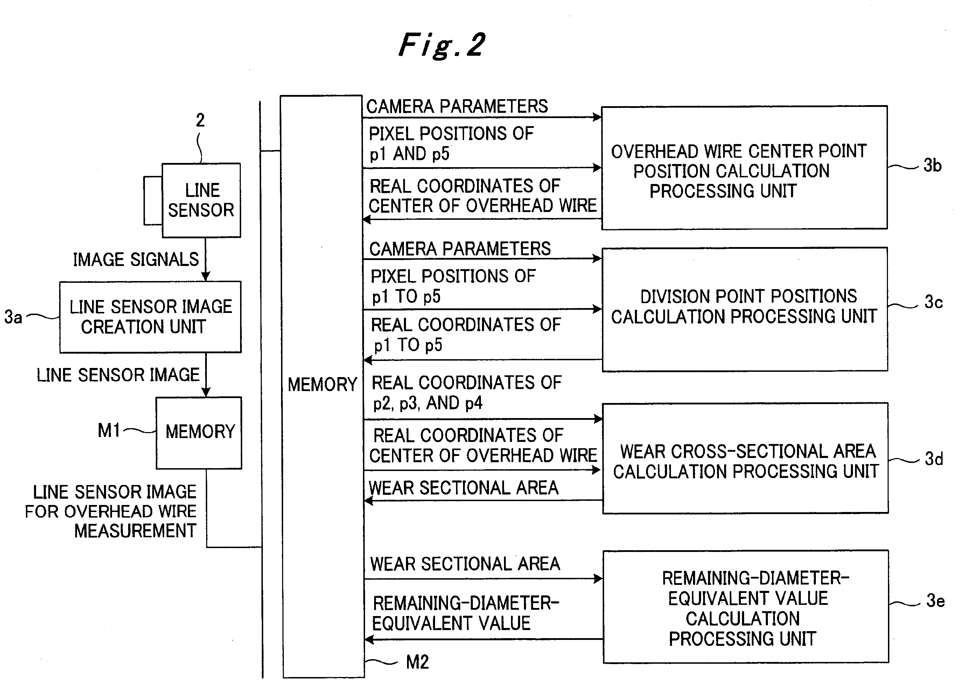

As shown in Fig. 2, the image processing device 3 includes a line sensor image creation unit 3a, an overhead wire center point position calculation processing unit 3b, a division point positions calculation processing unit 3c, a wear cross-sectional area calculation processing unit 3d, a remaining-diameter-equivalent value calculation processing unit 3e, and memory M1, M2 as storage means.

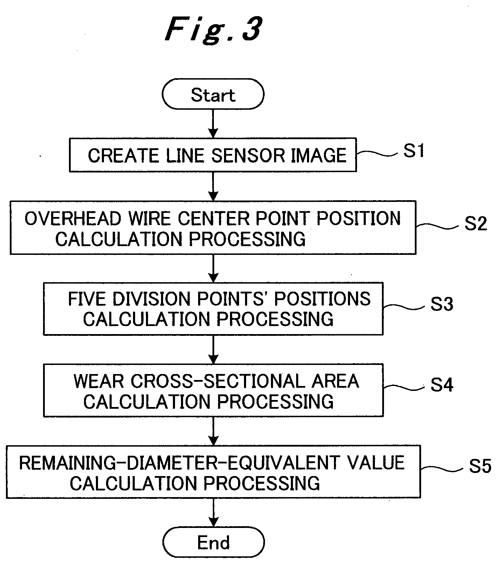

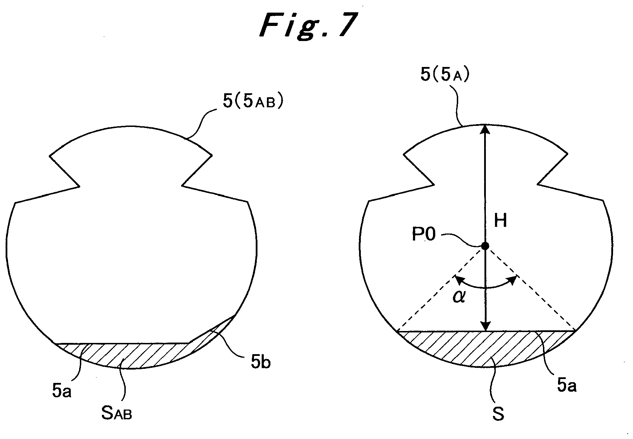

Following the flowchart shown in Fig 3, the image processing device 3 calculates a remaining-diameter-equivalent value H (see Fig. 7(b)) for an overhead wire with a worn part by performing image processing on the image signals received from the line sensor camera 2.

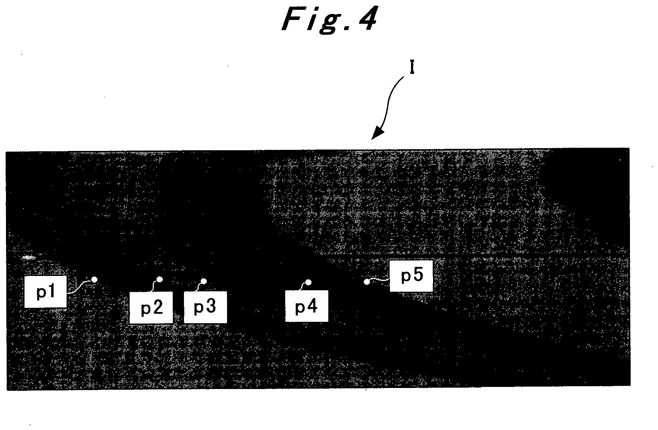

To be more specific, in the image processing device 3, the image signals received from the line sensor camera 2 are arranged chronologically by the line sensor image creation unit 3a and stored in the memory M1 as a line sensor image I (see Fig. 4) (Step S1).

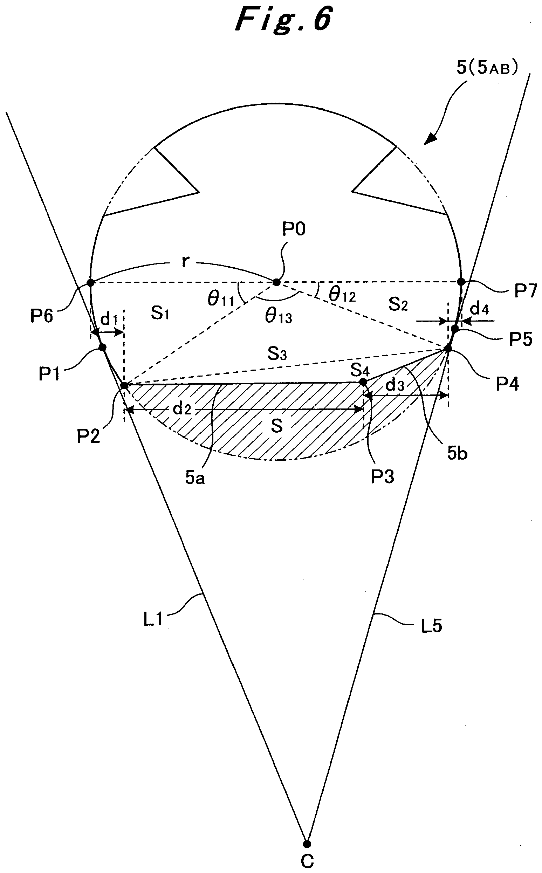

In the present embodiment, the pixel positions of points on the line sensor image I shown in Fig. 4 are, for example, set automatically by the system performing the image processing on the line sensor image I or by a user with a GUI, the points on the line sensor image I being the left end p1 of the overhead wire, the left end p2 of a horizontally worn part (an end portion of the horizontally worn part), the division point p3 between the horizontally worn part and an obliquely worn part, the right end p4 of the obliquely worn part (an end portion of the obliquely worn part), and the right end p5 of the overhead wire (which respectively correspond to points P1, P2, P3, P4, and P5 shown in Fig. 6 and are hereinafter referred to simply as division points p1 to p5). Camera parameters (focal length, the number of sensor elements, and sensor width) are preset.

After Step S1, the pixel positions of the division points p1 and p5, which are set based on the line sensor image I, are sent to the overhead wire center point position calculation processing unit 3b via the memory M2 along with the camera parameters, and the overhead wire center point position calculation processing unit 3b calculates the real coordinates P0 $(x_0, y_0)$ of the center point of the overhead wire 5 (Step S2).

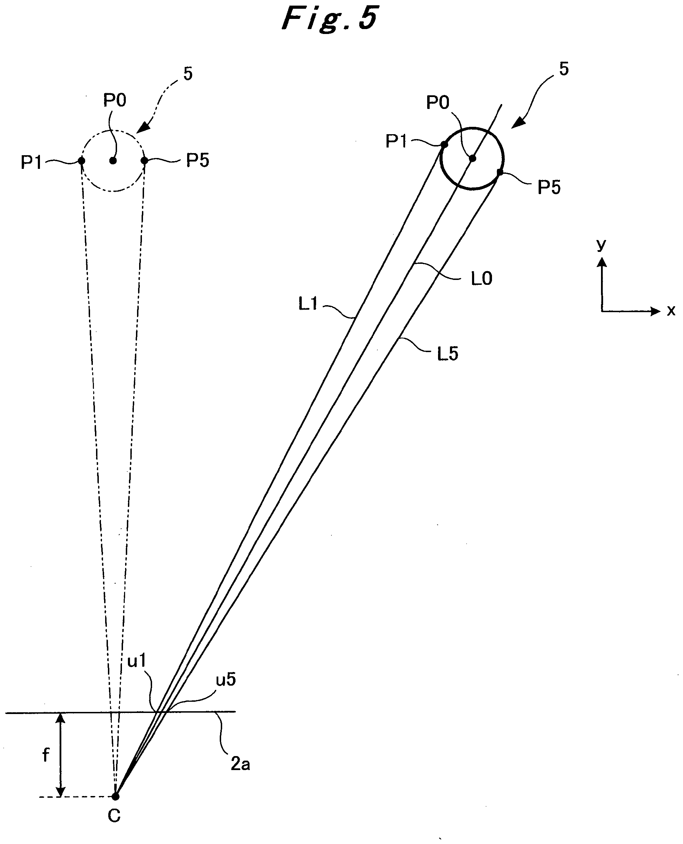

More specifically, first, the overhead wire center point position calculation processing unit 3b converts the pixel positions px1 and px5 [pix] of the division points p1 and p5 on the line sensor image I into coordinates u1 and u5 [mm] on the sensor plane shown in Fig. 5. For simple illustration, it is assumed that the following computation formulae do not consider lens distortion.

The pixel positions px1 and px5 [pix] are first converted into sensor-plane coordinates u1' and u5' [mm] by Formula (1) below where the origin is the left end of a sensor plane 2a and $\Delta u$ is the width of each sensor device. The sensor-plane coordinates u1 and u5 [mm] are then obtained by the conversion by Formula (2) below where the origin is the center end of the sensor plane 2a and U is the width of the sensor plane. Note that in Formulae (1) and (2) the pixel positions px1 and px5 are each denoted as px, the sensor-plane coordinates u1' and u5' are each denoted as u', and the sensor-plane coordinates u1 and u5 are each denoted as u.

$$u' = \Delta u \times px \qquad \cdots (1)$$

$$u = u' - U/2 \qquad \cdots (2)$$

The results are more accurate if the conversions are made considering lens distortion.

After finding the sensor-plane coordinates u1 and u5 from the pixel positions px1 and px5 of the division points p1 and p5 on the line sensor image I as described above, the overhead wire center point position calculation processing unit 3b obtains an equation of a straight line L1 passing through the sensor-plane coordinates u1 and the camera center point C and an equation of a straight line L5 passing through the sensor-plane coordinates u5 and the camera center point C as shown in Fig. 5. Note that the origin of the coordinate system is the camera center point C.

The equations of the straight lines L1 and L5 are given by Formula (3) below using a focal length f.

$$y = ax = (f/u)x \qquad \cdots (3)$$

The gradients $a_1$ and $a_5$ of the straight lines L1 and L5 are found respectively by $a_1 = f/u_1$ and $a_5 = f/u_5$, and the angles $\theta_1$ and $\theta_5$ of the straight lines L1 and L5 with respect to the horizontal line (the x direction) are found by Formula (4) below.

$$\theta = arcTan(f/u) \qquad \cdots (4)$$

In Formulae (3) and (4), the straight lines L1 are L5 are each denoted as L, the sensor-plane coordinates u1 and u5 are each denoted as u, the gradient $a_1$ of the straight line L1 and the gradient $a_5$ of the straight line L5 are each denoted as

a, the gradient $\theta_1$ of the straight line L1 and the gradient $\theta_5$ of the straight line L5 with respect to the x direction are each denoted as $\theta$.

Using the equations of the straight lines L1 and L5, the gradients $a_1$ and $a_5$ of the straight lines L1 and L5, and the gradients $\theta_1$ and $\theta_5$ of the straight lines L1 and L5 with respect to the x direction found above, the overhead wire center point position calculation processing unit 3b finds the real coordinates $(x_0, y_0)$ of the center point P0 of the overhead wire 5.

Specifically, as shown in Fig. 5, an equation of a straight line L0 passing through the center point P0 of the overhead wire 5 and the camera center point C is found by Formula (5) below:

$$y = a_0 x = \tan(\theta_0) x \qquad \cdots \quad (5)$$

because the angle $\theta_0$ of the straight line L0 with respect to the x direction is given by $\theta_0 = (\theta_1 + \theta_5)/2$.

Since the distance from the center point P0 $(x_0, y_0)$ of the overhead wire 5 on the straight line L0 to the straight line L1 is equal to the radius r [mm] of the overhead wire, the x coordinate $x_0$ of the center point P0 of the overhead wire 5 is found by Formula (6) below. Further, $y_0$ is obtained by $y_0 = a_0 x_0$. Formula (6) is derived using a "distance d from a point to a line formula" of Formula (7) below.

[Expression 1]

$$x_0 = \frac{r \times \sqrt{1 + (a_1)^2}}{a_0 - a_1} \qquad \cdots \quad (6)$$

$$d = \frac{|y_0 - ax_0 - b|}{\sqrt{1 + a^2}} \quad \text{where intercept b=0} \qquad \cdots \quad (7)$$

The real coordinates P0 $(x_0, y_0)$ of the center point of the overhead wire 5 is thus found.

After Step S2, the pixel positions of the division points p1 to p5 on the line sensor image I are sent to the division point positions calculation processing unit 3c via the memory M2 along with the camera parameters as shown in Fig. 2, and the division point positions calculation processing unit 3c finds, as shown in Fig. 3, the real coordinates P1 $(x_1, y_1)$, P2 $(x_2, y_2)$, P3 $(x_3, y_3)$, P4 $(x_4, y_4)$, and P5 $(x_5, y_5)$ of the division points p1, p2, p3, p4, and p5, respectively (Step 3).

First, the real coordinates P1 and P5 of the division points p1 and p5 are found. The real coordinates P1 and P5 are found using the condition that they are contact points between the overhead wire 5 and the straight lines L1 and L5, respectively. Specifically, P1 is the intersection of the straight line L1 ($y = a_1 x$) and a perpendicular $y = (-1/a_1)x + (1/a_1)x_0 + y_0$) to the straight line L1 passing through the center point P0 $(x_0, y_0)$ of the overhead wire 5, and P5 is the intersection of the straight line L5 ($y = a_5 x$) and a perpendicular $y = (-1/a_5)x + (1/a_5)x_0 + y_0$ to the straight line L5 passing through the center point P0 $(x_0, y_0)$ of the overhead wire 5. The x coordinate and the y coordinate of each of the real coordinates P1 and P5 are given by Formulae (8) and (9), respectively.

[Expression 2]

$$x_1 = \frac{x_0 + a_1 y_0}{a_1^2 + 1} \quad , \quad y_1 = a_1 x_1 \qquad \cdots \quad (8)$$

$$x_5 = \frac{x_0 + a_5 y_0}{a_5^2 + 1} \quad , \quad y_5 = a_5 x_5 \qquad \cdots \quad (9)$$

To calculate the real coordinates P2, P3, and P4 of the division points p2, p3, and p4, the real coordinates P2 and P4 of the division points p2 and p4 are found first. Equations of the straight lines L2 ($y = a_2 x$) and L4 ($y = a_4 x$) are found in the same manner as those of L1 and L5. The real coordinates P2 and P4 of the division points p2 and p4 are points on a circle of the overhead wire 5 as can be seen in Fig. 6, and can therefore be found as intersections of the straight lines L2 and L4 and the circle with the radius r centered at the center point P0 ($x_0$,$y_0$) of the overhead wire 5, respectively, shown in Formula (10) below. Note that in Formula (10), the x coordinates $x_2$ and $x_4$ of the real coordinates P2 and P4 are each denoted as x, and the gradients $a_2$ and $a_4$ of the straight lines L2 and L4 are each denoted as a.

[Expression 3]

$$x = \frac{x_0 + ay_0 \pm \sqrt{(x_0 + ay_0)^2 - (1 + a^2)(x_0{}^2 + y_0{}^2 - r^2)}}{1 + a^2} \qquad \cdots (10)$$

The y coordinates y2 and y4 of the real coordinates P2 and P4 are given by $y_2 = a_2 x_2$ and $y_4 = a_4 x_4$.

The real coordinates P2 ($x_2$,$y_2$) and the real coordinates P4 ($x_4$,$y_4$) are thus found.

Next, the real coordinates P3 ($x_3$,$y_3$) of the division point p3 are found. An equation of the straight line L3 passing through the center point P0 of the overhead wire 5 and P3, i.e., $y = a_3 x$, is found in the same manner as those of the straight lines L2 and L4. The y coordinate $y_3$ of the real coordinates P3 of the division point p3 can be found based on a determination on which of a part between P2 and P3 and a part between P3 and P4 is a horizontally worn part 5a and which of them is an obliquely worn part 5b. As shown in Fig. 6, when the overhead wire 5 has the horizontally worn part 5a and the obliquely worn part 5b, which is worn off more than the horizontally worn part 5a, the y coordinate $y_3$ of the real coordinates P3 can be determined based on the y coordinates $y_2$ and $y_4$ of P2 and P4. Specifically, the smaller y coordinate of the real coordinates P2 and P4 is the same as the y coordinate $y_3$ of P3. This can be given by Formula (11) below as a conditional equation.

[Expression 4]

$$y_3 = \begin{cases} y_2 & (y_2 < y_4) \\ y_4 & (y_2 \geq y_4) \end{cases} \qquad \cdots (11)$$

Then, $x_3$ can be obtained using $x_3 = y_3/a_3$.

The real coordinates P3 ($x_3$,$y_3$) of the division point p3 is thus found.

Next, the real coordinates P0 of the center of the overhead wire and the real coordinates P2, P3, and P4 of the division points p2, p3, and p4 are sent to the wear cross-sectional area calculation processing unit 3d via the memory M2 as shown in Fig. 2, and the wear cross-sectional area calculation processing unit 3d calculates the wear cross-sectional area as shown in Fig. 3 (Step S4).

Processing to calculate the wear cross-sectional area is described specifically below.

First, a description is given of the wear cross-sectional area calculation processing in an ideal situation. The following case is considered as an example: with P6 and P7 being the x-direction vertexes of the overhead wire 5 with the radius r [mm] as shown in Fig. 6, the distance $d_1$, $d_2$, $d_3$, and $d_4$ [mm], measured in the x direction, of a part between P6 and P2, a part between P2 to P3, a part between P3 and P4, and a part between P4 and P7 are known ($d_1 + d_2 + d_3 + d_4 = 2r$).

In this case, a wear cross-sectional area S is found as follows.

Specifically, with the parameters $d_1$, $d_2$, $d_3$, and $d_4$ given, the wear cross-sectional area S is found by Formula (12) below using the areas $S_1$ and $S_2$ of sectors P6P0P2 and P4P0P7 and the areas of $S_3$ and $S_4$ of triangles P0P2P4 and P2P3P4.

[Expression 5]

$$S = \frac{\pi r^2}{2} - (S_1 + S_2 + S_3 + S_4) \qquad \cdots (12)$$

When $\theta_{11}$ (=∠P2P0P6) and $\theta_{12}$ (=∠P4P0P7) are given by Formula (13) below and $h_1$, $h_2$, and $h_4$ are given by Formula (14) below, the wear cross-sectional area S is expressed as Formula (15) below.

[Expression 6]

$$\theta_{11} = \arccos\frac{r - d_1}{r} \quad , \quad \theta_{12} = \arccos\frac{d_1 + d_2 + d_3 - r}{r} \qquad \cdots \quad (13)$$

$$h_1 = r\sin\theta_{11} \quad , \quad h_2 = r\sin\theta_{12} \quad , \quad h_4 = r\left(\sin\theta_{11} - \sin\theta_{12}\right) \quad \cdots \quad (14)$$

$$S = \frac{r^2\left\{\pi - \theta_{11} - \theta_{12} - \sin\left(\pi - \theta_{11} - \theta_{12}\right)\right\} - d_2 r\left(\sin\theta_{11} - \sin\theta_{12}\right)}{2} \quad \cdots \quad (15)$$

In the ideal situation described above, the vertexes P6 and P7 are the ends of the overhead wire, and the distance $d_{67}$ between P6 and P7 is the diameter 2r of the overhead wire ($d_{67}$=2r). However, when the overhead wire 5 is captured by the line sensor camera 2, the real coordinates P1 and P5 corresponding to p1 and p5 on the line sensor image I are different from the vertexes P6 and P7 of the overhead wire 5 in the x direction, but are rather the contact points between the overhead wire 5 and the straight lines passing through the camera center point C as shown in Fig. 6. For this reason, the distance $d_{15}$ between P1 and P5 is not equal to the diameter 2r of the overhead wire ($d_{15}{\neq}2r$).

What also needs to be considered is that, as shown in Fig. 5, the positions of P1 and P5 relative to the center P0 of the overhead wire vary depending on the deviation positions of the overhead wire 5 from the line sensor camera 2. The following method obtains a remaining-diameter-equivalent value for the overhead wire with the above points taken into account.

Specifically, the actual wear cross-sectional area can be found if the coordinates of P2, P3, and P4 and r are known. First, if the length $d_{24}$ between P2 and P4 is found, the area $S_3$ of the triangle P0P2P4 is given by Formula (16) because the lengths of the sides of the triangle ($d_{24}$, r, r) are known.

[Expression 7]

$$S_3 = \sqrt{s(s - a)(s - b)(s - c)} \quad \text{where} \quad s = \frac{a + b + c}{2} \qquad \cdots \quad (16)$$

In the above formula, a=$d_{24}$, and b=c=r.

The area $S_4$ of the triangle P2P3P4 can be found in the same manner as the area $S_3$ by a formula for calculating the area of a triangle using the known lengths of its sides, namely the length $d_{23}$ (=$d_2$) between P2 and P3, the length $d_{34}$ between P3 and P4, and the length $d_{24}$ between P2 and P4.

Next, ∠P2P0P4 (=$\theta_{13}$) is found. Specifically, using the basic formula for finding the area of a triangle, i.e., area = (base × height) /2, the height h of the triangle P0P2P4 is found with the base being P2P4. Then, using the properties of an isosceles triangle, the angle $\theta_{13}$ is found by Formula (17) below.

[Expression 8]

$$\theta_{13} = \pi - 2\arctan\left(\frac{2h}{d_{24}}\right) \qquad \cdots \quad (17)$$

The area of the sector P2P0P4 is found using the angle $\theta_{13}$, and the wear cross-sectional area S is given by S= (the area of the sector P2P0P4) - ($S_3$+$S_4$).

Next, after the wear cross-sectional area is sent to the remaining-diameter-equivalent value calculation processing unit 3e via the memory M2 as shown in Fig. 2, the remaining-diameter-equivalent value calculation processing unit 3e calculates a remaining-diameter-equivalent value as shown in Fig. 3 (Step S5).

A description is given of a method for finding a remaining-diameter-equivalent value H for a part of the overhead wire 5 having the horizontally worn part 5a and the obliquely worn part 5b (the part of the overhead wire 5 having the horizontally worn part 5a and the obliquely worn part 5b is hereinafter referred to as an unevenly worn overhead wire $5_{AB}$.) First, a formula to find the wear cross-sectional area S of the overhead wire 5 having only the horizontally worn part 5a (hereinafter referred to as a horizontally worn overhead wire $5_A$) is given by Formula (18) below using the radius r of the horizontally worn overhead wire $5_A$ and a wear angle α shown in Fig. 7(b).

[Expression 9]

$$S = \frac{r^2}{2}(\alpha - \sin\alpha) \qquad \cdots (18)$$

In Formula (19) below, if the wear cross-sectional area $S_{AB}$ of the unevenly worn overhead wire $5_{AB}$ is known, the wear angle $\alpha$ can be calculated by Formula (20) by substitution of S in Formula (19) below using Newton's Method.
[Expression 10]

$$f(\alpha) = \frac{r^2}{2}(\alpha - \sin\alpha) - S \qquad \cdots (19)$$

$$\alpha_{i+1} = \alpha_i - \frac{f(\alpha_i)}{f'(\alpha_i)} \qquad \cdots (20)$$

As shown in Fig. 7(b), the wear angle $\alpha$ of the horizontally worn overhead wire $5_A$, which has the same area as the known wear cross-sectional area $S_{AB}$ of the unevenly worn overhead wire $5_{AB}$, is thus found.
Using $\alpha$ thus found, the remaining-diameter-equivalent value H is found by Formula (21) below.
[Expression 11]

$$H = r + r\cos\frac{\alpha}{2} \qquad \cdots (21)$$

The remaining diameter value of the horizontally worn overhead wire $5_A$, which has the same area as the known wear cross-sectional area $S_{AB}$ of the unevenly worn overhead wire $5_{AB}$, or in other words, the remaining-diameter-equivalent value H of the unevenly worn overhead wire $5_{AB}$, is thus found.
The remaining-diameter-equivalent value H thus found is recorded in the recording device 4.
The overhead wire wear measurement device and the overhead wire wear measurement method according to the present invention are not limited to the ones in the embodiment described above, and can of course be changed variously without departing from the gist of the present invention.
For example, although the division point positions calculation processing unit 3c calculates the real coordinates P1 $(x_1,y_1)$, P2 $(x_2,y_2)$, P3 $(x_3,y_3)$, P4 $(x_4,y_4)$, and P5 $(x_5,y_5)$ of the division points p1, p2, p3, p4, and p5 in the above embodiment, the division point positions calculation processing unit 3c may calculate at least the real coordinates P2 $(x_2,y_2)$, P3 $(x_3,y_3)$, and P4 $(x_4,y_4)$ of the division points p2, p3, and p4.
Although the worn surface of the overhead wire 5 has one horizontally worn part 5a and one obliquely worn part 5b in the embodiment described above, the worn surface of the overhead wire 5 may have a different wear shape.
According to the overhead wire wear measurement device and the overhead wire wear measurement method of the embodiment described above, the tensile strength of the overhead wire 5 can be accurately found even if the overhead wire 5 is the unevenly worn overhead wire $5_{AB}$ having the horizontally worn part 5a and the obliquely worn part 5b, because the remaining-diameter-equivalent value H which takes the horizontally worn part 5a and the obliquely worn part 5b into account can be calculated for the unevenly worn overhead wire $5_{AB}$ based on a remaining cross-sectional area found using the wear cross-sectional area $S_{AB}$.
Since the remaining-diameter-equivalent value H can be handled in the same way as the remaining diameter value for the regular horizontally worn overhead wire $5_A$, the management of the unevenly worn overhead wire $5_{AB}$ and the regular horizontally worn overhead wire $5_A$ can be advantageously unified. The idea of finding the remaining-diameter-equivalent value H from a cross-sectional area is flexibly applicable not only to an overhead wire with uneven wear, but also to an overhead wire with a different wear shape.

INDUSTRIAL APPLICABILITY

The present invention is suitably applicable to an overhead wire wear measurement device and an overhead wire wear measurement method for finding the remaining diameter of an overhead wire by capturing an image of the lower surface of the overhead wire, which comes into contact with a pantograph, with a wear measurement camera disposed on the roof of a train and by performing image processing on the captured image of the lower surface of the overhead wire.

EXPLANATION OF REFERENCE NUMERALS

1 vehicle
2 line sensor camera
3 image processing device
3a line sensor image creation unit
3b overhead wire center point position calculation processing unit
3c division point positions calculation processing unit
3d wear cross-sectional area calculation processing unit
3e remaining-diameter-equivalent value calculation processing unit
4 recording device
5 overhead wire
$5_A$ horizontally worn overhead wire
$5_{AB}$ unevenly worn overhead wire
5a horizontally worn part
5b obliquely worn part
6 rails
M1,M2 memory

Claims

1.  An overhead wire wear measurement method for finding a remaining diameter of an overhead wire (5) by capturing an image of a lower surface of the overhead wire (5), which comes into contact with a pantograph, with a wear measurement camera (2) disposed on a roof of a train (1) and by performing image processing on the captured image of the lower surface of the overhead wire (5),
    **characterized in that** a remaining diameter of a horizontally worn overhead wire (5A) having only a horizontally worn part (5a) is calculated as a remaining-diameter-equivalent value for an unevenly worn overhead wire (5AB) having a horizontally worn part (5a) and an obliquely worn part (5b), the horizontally worn overhead wire (5A) having the same cross-sectional area as the unevenly worn overhead wire (5AB).

2.  The overhead wire wear measurement method according to claim 1,**characterized in that**
    the method comprises the steps of:

    calculating real coordinates of a center point of the overhead wire (5) from the image of the lower surface of the overhead wire (5);
    calculating real coordinates of an end portion of the horizontally worn part (5a), real coordinates of a division point between the horizontally worn part (5a) and the obliquely worn part (5b), and real coordinates of an end portion of the obliquely worn part (5b) from the image of the lower surface of the overhead wire (5);
    calculating a cross-sectional area of the unevenly worn overhead wire (5AB) based on the real coordinates of the center point of the overhead wire (5), the real coordinates of the end portion of the horizontally worn part (5a), the real coordinates of the division point between the horizontally worn part (5a) and the obliquely worn part (5b), and the real coordinates of the end portion of the obliquely worn part (5b); and
    calculating the remaining-diameter-equivalent value based on the cross-sectional area of the unevenly worn overhead wire (5AB).

3.  An overhead wire wear measurement device comprising a wear measurement camera (2) configured to be disposed on a roof of a train (1) and an image processing unit (3) configured to find a remaining diameter of an overhead wire (5) by causing the wear measurement camera (2) to capture an image of a lower surface of the overhead wire (5), which comes into contact with a pantograph and by performing image processing on the captured image of the lower surface of the overhead wire (5),**characterized in that**

the image processing unit (3) includes a remaining-diameter-equivalent value calculation processing unit (3e) configured to calculate a remaining diameter of a horizontally worn overhead wire (5A) having only a horizontally worn part (5a), as a remaining-diameter-equivalent value for an unevenly worn overhead wire (5AB) having a horizontally worn part (5a) and an obliquely worn part (5b), the horizontally worn overhead wire (5A) having the same cross-sectional area as the unevenly worn overhead wire (5AB).

4. The overhead wire wear measurement device according to claim 3, **characterized in that**
   the image processing unit (3) includes
   an overhead wire (5) center point position calculation processing unit (3b) configured to calculate real coordinates of a center point of the overhead wire (5) from the image of the lower surface of the overhead wire (5); a division point positions calculation processing unit (3c) configured to calculate at least real coordinates of an end portion of the horizontally worn part (5a), real coordinates of a division point between the horizontally worn part (5a) and the obliquely worn part (5b), and real coordinates of an end portion of the obliquely worn part (5b) from the image of the lower surface of the overhead wire (5); and a wear cross-sectional area calculation processing unit (3d) configured to calculate a cross-sectional area of the unevenly worn overhead wire (5AB) based on the real coordinates of the center point of the overhead wire (5) calculated by the overhead wire center point position calculation processing unit (3b) and on the real coordinates of the end portion of the horizontally worn part (5a), the real coordinates of the division point between the horizontally worn part (5a) and the obliquely worn part (5b), and the real coordinates of the end portion of the obliquely worn part (5b) calculated by the division point positions calculation processing unit (3c), and
   the remaining-diameter-equivalent value calculation processing unit (3e) is configured to calculate the remaining-diameter-equivalent value based on the cross-sectional area of the unevenly worn overhead wire (5AB) calculated by the wear cross-sectional area calculation processing unit (3d).

**Patentansprüche**

1. Verfahren zur Verschleißmessung von Oberleitungen zum Auffinden eines Restdurchmessers eine Oberleitung (5) durch Erfassen eines Bildes einer Unterseite der Oberleitung (5), die mit einem Stromabnehmer in Kontakt tritt, mit einer Verschleißmesskamera (2), die auf einem Dach eines Zugs (1) angeordnet ist, und durch Durchführen einer Bildverarbeitung des aufgenommenen Bildes der Unterseite der Oberleitung (5),
   **dadurch gekennzeichnet, dass**
   ein Restdurchmesser einer horizontal verschlissenen Oberleitung (5A) mit nur einem horizontal verschlissenen Teil (5a) als Restdurchmesser-Äquivalenzwert für eine ungleichmäßig verschlissene Oberleitung (5AB) mit einem horizontal verschlissenen Teil (5a) und einem schräg verschlissenen Teil (5b) berechnet wird, wobei die horizontal verschlissene Oberleitung (5A) die gleiche Querschnittsfläche wie der ungleichmäßig verschlissene Oberleitung (5AB) aufweist.

2. Verfahren zur Verschleißmessung von Oberleitungen nach Anspruch 1,
   **dadurch gekennzeichnet, dass**
   das Verfahren die folgenden Schritte umfasst:

   Berechnen von realen Koordinaten eines Mittelpunktes der Oberleitung (5) aus dem Bild der Unterseite der Oberleitung (5);
   Berechnen von realen Koordinaten eines Endabschnitts des horizontal verschlissenen Teils (5a), realen Koordinaten eines Grenzpunkts zwischen dem horizontal verschlissenen Teil (5a) und dem schräg verschlissenen Teil (5b) und realen Koordinaten eines Endabschnitts des schräg verschlissenen Teils (5b) aus dem Bild der Unterseite der Oberleitung (5);
   Berechnen einer Querschnittsfläche der ungleichmäßig verschlissenen Oberleitung (5AB) abhängig von den realen Koordinaten des Mittelpunktes der Oberleitung (5), den realen Koordinaten des Endabschnitts des horizontal verschlissenen Teils (5a), den realen Koordinaten des Grenzpunkts zwischen dem horizontal verschlissenen Teil (5a) und dem schräg verschlissenen Teil (5b) und den realen Koordinaten des Endabschnitts des schräg verschlissenen Teils (5b); und
   Berechnen des Restdurchmesser-Äquivalenzwertes abhängig von der Querschnittsfläche der ungleichmäßig verschlissenen Oberleitung (5AB).

3. Oberleitungsverschleißmessvorrichtung mit einer Verschleißmesskamera (2), die dazu ausgelegt ist, auf einem Dach eines Zuges (1) angeordnet zu sein, und einer Bildverarbeitungseinheit (3), die dazu ausgelegt ist, einen Restdurchmesser einer Oberleitung (5) zu finden, indem sie bewirkt, dass die Verschleißmesskamera (2) ein Bild einer Unterseite der Oberleitung (5) erfasst, die mit einem Stromabnehmer in Kontakt tritt, und indem sie eine Bildverarbeitung des aufgenommenen Bildes der Unterseite der Oberleitung (5) durchführt,
**dadurch gekennzeichnet, dass**
die Bildverarbeitungseinheit (3) eine Verarbeitungseinheit (3e) zur Berechnung des Restdurchmessers einer horizontal verschlissenen Oberleitung (5A) mit nur einem horizontal verschlissenen Teil (5a) als Restdurchmesser-Äquivalenzwert für einen ungleich verschlissenen Oberleiter (5AB) mit einem horizontal verschlissenen Teil (5a) und einem schräg verschlissenen Teil (5b) umfasst, wobei die horizontal verschlissene Oberleitung (5A) die gleiche Querschnittsfläche wie die ungleichmäßig verschlissene Oberleitung (5AB) aufweist.

4. Die Oberleitungsverschleißmessvorrichtung nach Anspruch 3,
**dadurch gekennzeichnet, dass**
die Bildverarbeitungseinheit (3) umfasst:

eine Mittelpunktpositionsberechnungseinheit (3b) für die Oberleitung (5), die dazu ausgelegt ist, reale Koordinaten eines Mittelpunktes der Oberleitung (5) aus dem Bild der Unterseite der Oberleitung (5) zu berechnen;
eine Verarbeitungseinheit (3c) zum Berechnen von Grenzpunktposition, die dazu ausgelegt ist, wenigstens reale Koordinaten eines Endabschnitts des horizontal verschlissenen Teils (5a), reale Koordinaten eines Grenzpunkts zwischen dem horizontal verschlissenen Teil (5a) und dem schräg verschlissenen Teil (5b) und reale Koordinaten eines Endabschnitts des schräg verschlissenen Teils (5b) aus dem Bild der Unterseite der Oberleitung (5) zu berechnen; und
eine Verarbeitungseinheit (3d) zur Berechnung der Verschleißquerschnittsfläche, die dazu ausgelegt ist, eine Querschnittsfläche der ungleichmäßig verschlissenen Oberleitung (5AB) abhängig von den realen Koordinaten des Mittelpunktes der Oberleitung (5), die von der Verarbeitungseinheit (3b) zur Berechnung der Position des Mittelpunktes der Oberleitung berechnet wurden, von den realen Koordinaten des Endabschnitts des horizontal verschlissenen Teils (5a), den realen Koordinaten des Grenzpunkts zwischen dem horizontal verschlissenen Teil (5a) und dem schräg verschlissenen Teil (5b) und von den realen Koordinaten des Endabschnitts des schräg verschlissenen Teils (5b), die durch die Berechnungseinheit (3c) zur Berechnung der Teilungspunktpositionen berechnet wurden, zu berechnen, und
die Verarbeitungseinheit (3e) zur Berechnung des Restdurchmesser-Äquivalenzwertes dazu ausgelegt ist, den Restdurchmesser-Äquivalenzwert abhängig von der Querschnittsfläche der ungleichmäßig verschlissenen Oberleitung (5AB) zu berechnen, die von der Verarbeitungseinheit (3d) zur Berechnung der Verschleißquerschnittsfläche berechnet wird.

**Revendications**

1. Procédé de mesure d'usure de fil aérien pour trouver un diamètre restant d'un fil aérien (5) par capture d'une image d'une surface inférieure du fil aérien (5), qui vient en contact avec un pantographe, avec une caméra de mesure d'usure (2) disposée sur un toit d'un train (1) et par exécution d'un traitement d'image sur l'image capturée de la surface inférieure du fil aérien (5),
**caractérisé en ce que**
un diamètre restant d'un fil aérien horizontalement usé (5A) ayant uniquement une partie horizontalement usée (5a) est calculé comme une valeur d'équivalent de diamètre restant pour un fil aérien inégalement usé (5AB) ayant une partie horizontalement usée (5a) et une partie obliquement usée (5b), le fil aérien horizontalement usé (5A) ayant la même superficie en coupe transversale que le fil aérien inégalement usé (5AB).

2. Procédé de mesure d'usure de fil aérien selon la revendication 1, **caractérisé en ce que**
le procédé comprend les étapes de :

calcul de coordonnées réelles d'un point central du fil aérien (5) à partir de l'image de la surface inférieure du fil aérien (5) ;
calcul de coordonnées réelles d'une partie d'extrémité de la partie horizontalement usée (5a), de coordonnées réelles d'un point de division entre la partie horizontalement usée (5a) et la partie obliquement usée (5b), et de coordonnées réelles d'une partie d'extrémité de la partie obliquement usée (5b) à partir de l'image de la surface inférieure du fil aérien (5) ;

calcul d'une superficie en coupe transversale du fil aérien inégalement usé (5AB) sur la base des coordonnées réelles du point central du fil aérien (5), des coordonnées réelles de la partie d'extrémité de la partie horizontalement usée (5a), des coordonnées réelles du point de division entre la partie horizontalement usée (5a) et la partie obliquement usée (5b), et des coordonnées réelles de la partie d'extrémité de la partie obliquement usée (5b) ; et

calcul de la valeur d'équivalent de diamètre restant sur la base de la superficie en coupe transversale du fil aérien inégalement usé (5AB).

3. Dispositif de mesure d'usure de fil aérien comprenant une caméra de mesure d'usure (2) configurée pour être disposée sur un toit d'un train (1) et une unité de traitement d'image (3) configurée pour trouver un diamètre restant d'un fil aérien (5) en faisant en sorte que la caméra de mesure d'usure (2) capture une image d'une surface inférieure du fil aérien (5), qui vient en contact avec un pantographe, et en exécutant un traitement d'image sur l'image capturée de la surface inférieure du fil aérien (5), **caractérisé en ce que**

l'unité de traitement d'image (3) inclut une unité de traitement de calcul de valeur d'équivalent de diamètre restant (3e) configurée pour calculer un diamètre restant d'un fil aérien horizontalement usé (5A) ayant uniquement une partie horizontalement usée (5a), comme une valeur d'équivalent de diamètre restant pour un fil aérien inégalement usé (5AB) ayant une partie horizontalement usée (5a) et une partie obliquement usée (5b), le fil aérien horizontalement usé (5A) ayant la même superficie en coupe transversale que le fil aérien inégalement usé (5AB).

4. Dispositif de mesure d'usure de fil aérien selon la revendication 3, **caractérisé en ce que**

l'unité de traitement d'image (3) inclut

une unité de traitement de calcul de position de point central de fil aérien (5) (3b) configurée pour calculer des coordonnées réelles d'un point central du fil aérien (5) à partir de l'image de la surface inférieure du fil aérien (5) ;

une unité de traitement de calcul de positions de points de division (3c) configurée pour calculer au moins des coordonnées réelles d'une partie d'extrémité de la partie horizontalement usée (5a), des coordonnées réelles d'un point de division entre la partie horizontalement usée (5a) et la partie obliquement usée (5b), et des coordonnées réelles d'une partie d'extrémité de la partie obliquement usée (5b) à partir de l'image de la surface inférieure du fil aérien (5) ; et

une unité de traitement de calcul de superficie en coupe transversale d'usure (3d) configurée pour calculer une superficie en coupe transversale du fil aérien inégalement usé (5AB) sur la base des coordonnées réelles du point central du fil aérien (5) calculées par l'unité de traitement de calcul de position de point central de fil aérien (3b), et des coordonnées réelles de la partie d'extrémité de la partie horizontalement usée (5a), des coordonnées réelles du point de division entre la partie horizontalement usée (5a) et la partie obliquement usée (5b), et des coordonnées réelles de la partie d'extrémité de la partie obliquement usée (5b) calculées par l'unité de traitement de calcul de positions de points de division (3c) ; et l'unité de traitement de calcul de valeur d'équivalent de diamètre restant (3e) est configurée pour calculer la valeur d'équivalent de diamètre restant sur la base de la superficie en coupe transversale du fil aérien inégalement usé (5AB) calculée par l'unité de traitement de calcul de superficie en coupe transversale d'usure (3d).

## Fig.1

IMAGE
PROCESSING
DEVICE

## Fig.2

LINE SENSOR — 2

IMAGE SIGNALS

3a — LINE SENSOR IMAGE CREATION UNIT

LINE SENSOR IMAGE

M1 — MEMORY

LINE SENSOR IMAGE FOR OVERHEAD WIRE MEASUREMENT

MEMORY

CAMERA PARAMETERS

PIXEL POSITIONS OF p1 AND p5

REAL COORDINATES OF CENTER OF OVERHEAD WIRE

OVERHEAD WIRE CENTER POINT POSITION CALCULATION PROCESSING UNIT — 3b

CAMERA PARAMETERS

PIXEL POSITIONS OF p1 TO p5

REAL COORDINATES OF p1 TO p5

DIVISION POINT POSITIONS CALCULATION PROCESSING UNIT — 3c

REAL COORDINATES OF p2, p3, AND p4

REAL COORDINATES OF CENTER OF OVERHEAD WIRE

WEAR SECTIONAL AREA

WEAR CROSS-SECTIONAL AREA CALCULATION PROCESSING UNIT — 3d

WEAR SECTIONAL AREA

REMAINING-DIAMETER-EQUIVALENT VALUE

REMAINING-DIAMETER-EQUIVALENT VALUE CALCULATION PROCESSING UNIT — 3e

M2

EP 3 252 428 B1

# *Fig.3*

```
                    ( Start )
                       │
                       ▼
        ┌──────────────────────────────┐
        │   CREATE LINE SENSOR IMAGE    │──── S1
        └──────────────────────────────┘
                       │
                       ▼
   ┌──────────────────────────────────────┐
   │ OVERHEAD WIRE CENTER POINT POSITION   │──── S2
   │      CALCULATION PROCESSING           │
   └──────────────────────────────────────┘
                       │
                       ▼
     ┌────────────────────────────────┐
     │  FIVE DIVISION POINTS' POSITIONS│──── S3
     │     CALCULATION PROCESSING      │
     └────────────────────────────────┘
                       │
                       ▼
     ┌────────────────────────────────┐
     │   WEAR CROSS-SECTIONAL AREA     │──── S4
     │     CALCULATION PROCESSING      │
     └────────────────────────────────┘
                       │
                       ▼
   ┌──────────────────────────────────────┐
   │ REMAINING-DIAMETER-EQUIVALENT VALUE   │──── S5
   │      CALCULATION PROCESSING           │
   └──────────────────────────────────────┘
                       │
                       ▼
                    ( End )
```

# Fig.4

# Fig.5

# *Fig.6*

# *Fig.7*

5(5AB)

5a

S_AB

5b

5(5A)

P0

H

α

5a

S

# Fig.8

(a)

(b)

(c)

(d)

# Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009274508 A
- JP 4635657 B
- JP 5534058 B
- JP 5380000 B

**Non-patent literature cited in the description**

- Overview of Electricity for Railway Engineers, Series 2 of Electric Train Lines, Train Wires. *JAPAN RAILWAY ELECTRICAL ENGINEERING ASSOCIATION,* 10 November 1998, 4-5, 32-33